# FASCICULE DE BREVET EUROPEEN

(11) **EP 2 795 551 B1**
(45) Date de publication et mention de la délivrance du brevet: **09.03.2016**
(21) Numéro de dépôt: 12813832.8
(22) Date de dépôt: 20.12.2012
(51) Int. Cl.: G06Q 20/32, G06Q 20/34, G06F 21/53, H04L 29/06

(54) **PROCÉDÉ DE ROUTAGE AU SEIN D'UN TERMINAL MOBILE ÉMULANT UNE CARTE DE PAIEMENT SANS CONTACT**
ROUTINGVERFAHREN IN EINEM MOBILEN ENDGERÄT ZUR EMULATION EINER KONTAKTLOSEN ZAHLUNGSKARTE
METHOD FOR ROUTING WITHIN A MOBILE TERMINAL EMULATING A CONTACTLESS PAYMENT CARD

(30) Priorité: 21.12.2011 FR 1162120
(43) Date de publication de la demande: 29.10.2014
(73) Titulaire: Morpho, 92130 Issy-les-Moulineaux (FR)
(72) Inventeur: GONCALVES, Louis-Philippe, F-92130 Issy-les-Moulineaux (FR); POLY, Sébastien, F-92130 Issy-les-Moulineaux (FR)
(74) Mandataire: Maillet, Alain
(86) Numéro de dépôt international: PCT/EP2012/076280
(87) Numéro de publication internationale: WO 2013/092796

(56) Documents cités:
- US-A1- 2011 143 663
- GSMA: "Mobile NFC technical guidelines", INTERNET CITATION, décembre 2007 (2007-12), pages 1-95, XP002558746, Extrait de l'Internet: URL:http://www.gsmworld.com/documents/gsma _nfc2_wp.pdf [extrait le 2010-01-14]
- GERALD MADLMAYR ET AL: "Management of Multiple Cards in NFC-Devices", 8 septembre 2008 (2008-09-08), SMART CARD RESEARCH AND ADVANCED APPLICATIONS; [LECTURE NOTES IN COMPUTER SCIENCE], SPRINGER BERLIN HEIDELBERG, BERLIN, HEIDELBERG, PAGE(S) 149 - 161, XP019104509, ISBN: 978-3-540-85892-8 abrégé chapitres 1 - 3
- Gerald Madlmayr: "Management of Multiple Secure Elements in NFC-Devices", Cardis 2008, Royal Holloway University of London, 1 janvier 2008 (2008-01-01), XP055024802, Extrait de l'Internet: URL:http://www.nfc-research.at/fileadmin/p apers/2008/09/2008_09_11_Cardis.pdf [extrait le 2012-04-18]
- MARIE REVEILHAC ET AL: "Promising Secure Element Alternatives for NFC Technology", PROCEEDINGS 2009 FIRST INTERNATIONAL WORKSHOP ON NEAR FIELD COMMUNICATION - NFC '09, IEEE, PISCATAWAY, NJ, USA, 24 février 2009 (2009-02-24), pages 75-80, XP031500082, ISBN: 978-0-7695-3577-7

## Description

La présente invention concerne le domaine de l'émulation des cartes de paiement sans contact et plus particulièrement le routage de la communication sans contact au sein d'un dispositif comportant plusieurs circuits d'émulation de cartes de paiement sans contact.

Les cartes bancaires pouvant servir au paiement en magasin sont composées d'un composant de carte à puce hébergeant les applications bancaires. Ce composant dispose d'un haut niveau de sécurité et est appelé pour cela « élément de sécurité » ou SE pour (*Secure Element* en anglais).

Lorsqu'une telle carte est utilisée pour un paiement, elle est introduite dans le lecteur d'un terminal de paiement. Une connexion s'établit alors entre le terminal de paiement et le SE pour réaliser le paiement. La connexion est une connexion physique utilisant les connecteurs physiques du SE.

Le paiement sans contact se développe. Il est basé sur l'utilisation lors du paiement d'une carte dite de paiement sans contact qui agrège typiquement d'une part le SE d'une carte de paiement classique et une étiquette de communication en champ proche dite NFC (*Near Field Communication* en anglais). Le terminal de paiement est alors équipé d'un lecteur d'étiquette NFC. Le fonctionnement est alors le même que pour une carte de paiement classique, la connexion physique étant remplacée par la connexion radio en champ proche du type NFC.

Les utilisateurs sont de plus en plus équipés de terminaux mobiles tels que les téléphones mobiles, les assistants numériques ou les ordinateurs portables. De plus en plus de ces terminaux sont dotés d'interfaces de communication radio en champ proche. On utilise alors ces terminaux pour réaliser un paiement sans contact. Il suffit de doter ces terminaux d'un élément de sécurité similaire à celui équipant les cartes de paiement sans contact pour permettre un usage du terminal mobile dans un mode d'émulation d'une carte de paiement sans contact. Dans ce mode d'émulation d'une carte de paiement sans contact, la communication entre le terminal de paiement et l'élément de sécurité est effectuée directement via le contrôleur NFC du dispositif sans être contrôlée par le processeur du terminal mobile et son système d'exploitation. Ceci est une obligation pour des raisons de sécurité notamment, un système corrompu ne doit pas être en mesure d'influer sur la communication sécurisée entre le terminal de paiement et l'élément de sécurité.

Plusieurs solutions d'implémentation d'éléments de sécurité sont possibles. L'élément de sécurité peut être implémenté au sein de la carte d'abonné ou carte SIM (*Subscriber Identity Module* en anglais) dans le cas où le terminal mobile est un téléphone mobile, ou une carte SIM sécurisée. Il peut également être implémenté sous la forme d'un composant de la carte mère du terminal mobile, ou encore au sein d'une carte additionnelle, par exemple une carte SD (*Secure Digital* en anglais). Il pourrait également s'agir d'une carte de paiement, par exemple reliée de manière appropriée au terminal. Un même terminal peut même comporter plusieurs éléments de sécurité différents susceptibles de communiquer avec un terminal de paiement au travers de l'interface radio à champ proche.

Dans un tel terminal se pose le problème d'acheminer les communications vers le bon élément de sécurité. Le document « mobile NFC technical guidelines » publié par la GSMA (version 2.0) traite de ce problème.

L'invention vise à résoudre les problèmes précédents par un procédé de routage des messages au sein du contrôleur NFC. Ce contrôleur dispose d'une table des différentes applications hébergées par les différents éléments de sécurité. Lorsque le contrôleur reçoit une requête pour la liste des applications contenues dans la carte de paiement virtuelle, il intercepte cette requête et répond avec la liste des différentes applications accessibles sur les différents éléments de sécurité. Quand une requête visant à sélectionner une application est reçue, le contrôleur mémorise l'élément de sécurité concerné et redirige tous les messages vers cet élément tant qu'il ne reçoit pas de nouvelle requête de sélection.

L'invention concerne un procédé de routage au sein d'un terminal mobile émulant une carte de paiement sans contact et comportant une pluralité d'éléments de sécurité pouvant dialoguer avec un composant de communication radio en champ proche, comportant les étapes suivantes : une étape de réception par le composant de communication radio d'un message provenant d'un terminal de paiement et qui comporte en outre, si la commande reçue est une commande de sélection destinée à recevoir la liste des applications disponibles : une étape de constitution de ladite liste à partir d'une table mémorisée, ladite liste contenant tout ou partie des applications disponibles dans l'ensemble des éléments de sécurité ; une étape d'envoi de ladite liste au terminal de paiement en réponse à la commande de sélection reçue et qui comporte en outre, si la commande reçue est une commande de sélection d'application : une étape de consultation de ladite table mémorisée pour identifier l'élément de sécurité hébergeant l'application sélectionnée ; une étape de mémorisation de l'élément de sécurité identifié comme élément de sécurité actif; une étape de relais de ladite commande de sélection d'application à l'élément de sécurité actif et qui comporte en outre, pour toutes les autres commandes reçues, une étape de relais de ladite commande reçue à l'élément de sécurité actif.

Selon un mode particulier de réalisation de l'invention, ladite table mémorisée comportant pour chaque application un identifiant d'application qualifié de public en outre de son identifiant d'application au sein de l'élément de sécurité, celui-ci étant alors appelé identifiant réel, l'étape de constitution de la liste des applications constitue ladite liste à partir des identifiants publics et non pas des identifiants réels des applications et l'étape de relais de la commande à l'élément de sécurité comporte quant à elle une étape de remplacement de l'identifiant public par l'identifiant réel de l'application préalablement au relais de la commande à l'élément de sécurité actif.

Selon un mode particulier de réalisation de l'invention, il comporte en outre une étape de mise à jour de ladite table mémorisée lorsqu'intervient une modification dans l'architecture des éléments de sécurité du terminal mobile.

Selon un mode particulier de réalisation de l'invention, ladite étape de mise à jour s'effectue sous le contrôle d'un module de mise à jour s'exécutant sur le processeur central dudit terminal.

Selon un mode particulier de réalisation de l'invention, il comporte en outre une étape de gestion des droits d'accès à ladite table par ledit module de mise à jour.

L'invention concerne également un terminal mobile émulant une carte de paiement sans contact et comportant une pluralité d'éléments de sécurité pouvant dialoguer avec un composant de communication radio en champ proche, comportant des moyens pour réceptionner par le composant de communication radio un message provenant d'un terminal de paiement et qui comporte en outre si la commande reçue est une commande de sélection destinée à recevoir la liste des applications disponibles : des moyens pour constituer ladite liste à partir d'une table mémorisée, ladite liste contenant tout ou partie des applications disponibles dans l'ensemble des éléments de sécurité ; des moyens pour envoyer ladite liste au terminal de paiement en réponse à la commande de sélection reçue et qui comporte en outre si la commande reçue est une commande de sélection d'application : des moyens pour consulter ladite table mémorisée pour identifier l'élément de sécurité hébergeant l'application sélectionnée ; des moyens pour mémoriser l'élément de sécurité identifié comme élément de sécurité actif; des moyens pour relayer ladite commande de sélection d'application à l'élément de sécurité actif et qui comporte en outre pour toutes les autres commandes reçues des moyens pour relayer ladite commande reçue à l'élément de sécurité actif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale d'un terminal mobile équipé de plusieurs éléments de sécurité.
La Fig. 2 détaille cette architecture dans un exemple de réalisation de l'invention.
La Fig. 3 illustre les échanges entre les différents composants du système lors d'une sélection d'application.
La Fig. 4 illustre l'organigramme de fonctionnement du module de routage au sein du contrôleur NFC dans un exemple de réalisation de l'invention.

Nous appelons terminal mobile dans ce texte tout type de dispositif de traitement de l'information pouvant être porté par un utilisateur et susceptible d'héberger une interface de communication radio à champ proche du type NFC. Selon l'exemple de réalisation décrit, ce terminal est un terminal de téléphonie mobile, mais il peut également s'agir d'un assistant personnel numérique, d'un ordinateur portable ou autre.

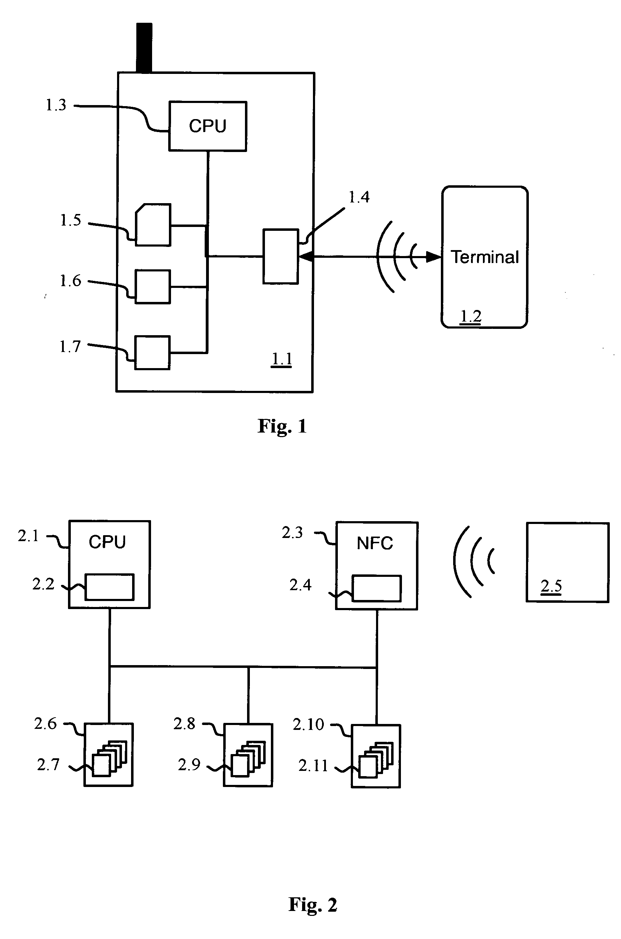

L'architecture de ce dispositif est illustrée par la Fig. 1. Le terminal 1.1 dispose d'un processeur principal 1.3 qui permet le fonctionnement du système d'exploitation du terminal.

Un élément de sécurité est défini comme un composant constitué d'une unité de calcul et de mémoire. Ces éléments de sécurité sont prévus pour pouvoir héberger de manière sécurisée des applications diverses dont typiquement des applications bancaires. Ces applications bancaires sont destinées, entre autres, à permettre à l'utilisateur du terminal d'effectuer des paiements à l'aide de son terminal. Typiquement les éléments de sécurité hébergent également une unité de traitement cryptographique utilisée pour les algorithmes de signature, chiffrement et déchiffrement de contenu à l'aide de certificats numériques. Ils hébergent les certificats permettant à l'utilisateur de s'authentifier auprès des services bancaires, etc. Le fonctionnement de ces éléments de sécurité est normalisé et peut être consulté sous la référence ISO 7816.

Nous rappelons ici qu'un élément de sécurité peut être implémenté au sein de la carte d'abonné ou carte SIM (Subscriber Identity Module en anglais) dans le cas où le terminal 1.1 est un téléphone mobile, ou encore une carte SIM sécurisée. Il peut également être implémenté sous la forme d'un composant de la carte mère du terminal 1.1, ou encore au sein d'une carte additionnelle, par exemple une carte SD (Secure Digital en anglais). Il pourrait également s'agir d'une carte de paiement reliée de manière appropriée au terminal 1,1. Un terminal 1.1 peut même comporter plusieurs éléments de sécurité différents susceptibles de communiquer avec un terminal de paiement au travers d'une interface radio à champ proche.

A la Fig. 1, trois éléments de sécurité 1.5, 1.6 et 1.7 sont connectés au processeur central 1.3, par exemple via un lien série. Le processeur central 1.3 peut donc interagir avec ces éléments de sécurité 1.5, 1.6 et 1.7, leur envoyer des commandes et recevoir les réponses.

Pour permettre au terminal 1.1 de fonctionner dans un mode d'émulation d'une carte de paiement sans contact, il est nécessaire d'adjoindre un composant 1.4 de communication radio en champ proche NFC au terminal. Ce composant 1.4 peut également communiquer grâce au bus avec le processeur central 1.3. Typiquement pour une utilisation autre que le paiement sans contact, le composant NFC est piloté par une application fonctionnant sur ce processeur central 1.3.

Par contre, pour le fonctionnement en émulation d'une carte de paiement sans contact, notamment pour des raisons de sécurité, la communication entre le composant NFC et un élément de sécurité est directe. Cette communication ne transite pas par le processeur central 1.3. Ainsi, même si le système d'exploitation fonctionnant sur ce processeur central 1.3 venait à être corrompu, le fonctionnement de la carte de paiement sans contact n'est pas menacé. Ce fonctionnement est parfait lorsque le terminal 1.1 n'héberge qu'un seul élément de sécurité.

Le problème qui se pose est de permettre un routage des communications entre le composant NFC 1.4 et les différents éléments de sécurité, en l'occurrence, à titre d'exemple les éléments de sécurité 1.5, 1.6 et 1.7..

La Fig. 2 illustre plus en détail l'architecture d'un exemple de réalisation. On retrouve le composant NFC 2.3 qui permet une communication avec un terminal de paiement 2.5. Le composant NFC peut communiquer avec une pluralité 2.6, 2.8 et 2.10 d'éléments de sécurité. L'appareil fonctionne toujours sous le contrôle d'un système d'exploitation qui tourne sur le processeur 2.1

La Fig. 2 représente en plus les diverses applications 2.7, 2.9 et 2.11 hébergées par chacun des éléments de sécurité 2.6, 28 et 2.10. L'invention est essentiellement mise en oeuvre au sein du composant NFC 2.3 sous la forme d'un module de routage 2.4. Selon certains modes de réalisation particuliers de l'invention, un module 2.2 de gestion d'une table des applications disponibles peut être utilisé. Ce module fonctionne alors sur le processeur central 2.1 du terminal mobile 1.1. Nous allons détailler son fonctionnement plus loin.

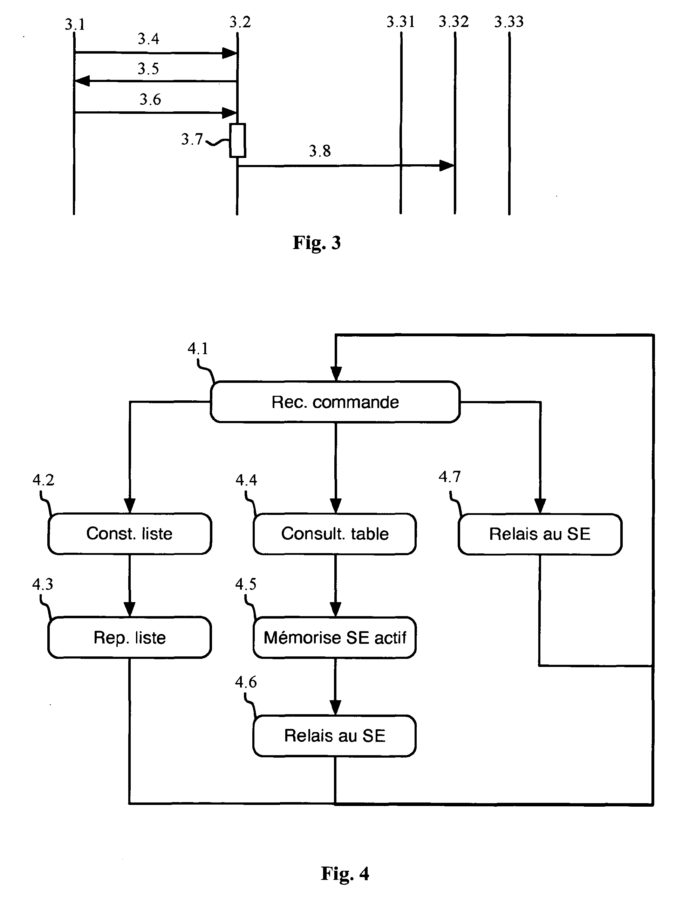

La Fig. 3 illustre les échanges entre les différents composants du système lors d'une sélection d'application.

Le fonctionnement classique d'une carte de paiement sans contact est le suivant. Lorsque la carte entre dans le champ du lecteur équipant le terminal de paiement des échanges protocolaires de bas niveau ont lieu pour initialiser la connexion. Ces échanges ne sont pas décrits en détail ici. Ensuite, le terminal de paiement envoie une première commande de sélection appelée « SELECT PPSE » qui vise à demander à la carte la liste des applications présentes au sein de celle-ci. La carte répond à cette requête à l'aide d'une liste des applications disponibles et pour chaque application donne un identifiant d'application connu sous le nom de AID (*Application IDentifier* en anglais). Le terminal en choisit une dans la liste et la sélectionne à l'aide d'une commande « SELECT AID ». Tous les échanges suivants ont alors lieu entre le terminal et l'application sélectionnée tant qu'une nouvelle commande de sélection n'est pas envoyée par le terminal de paiement.

Dans le cadre du terminal mobile émulant une carte de paiement, nous avons une pluralité d'éléments de sécurité, chacun de ces éléments de sécurité correspondant à une carte de paiement sans contact.

Le terminal de paiement est représenté par la ligne 3.1 dans la Fig. 3. La ligne 3.2 représente le composant NFC du terminal mobile, tandis que les lignes 3.31, 3.32 et 3.33 représentent les différents éléments de sécurité hébergés dans le terminal mobile.

Lorsque le terminal envoie une commande « SELECT PPSE » 3.4 visant à réclamer la liste des applications bancaires disponibles, cette requête est reçue en premier lieu par le composant NFC 2.3. Cette requête est alors filtrée et reconnue comme telle par un module *ad hoc,* appelé module de routage et référencé 2.4 sur la Fig. 2. Le premier aspect innovant de l'invention consiste en cette interception et dans le fait que le module de routage intercepte la commande « SELECT PPSE » pour y répondre en lieu et place d'un des éléments de sécurité.

Le module de routage répond donc à la requête en renvoyant 3.5 une table des applications disponibles sur l'ensemble des éléments de sécurité. Cette table peut être constituée de diverses manières. Elle peut être configurée lors de l'initialisation du terminal ou fixée par l'opérateur ou encore par la banque dont l'utilisateur est client. Tout moyen de constituer la table est admissible. On peut également avoir une étape initiale où le module de routage envoie lui-même une commande « SELECT PPSE » à chacun des éléments de sécurité, recueille les réponses envoyées par chacun des éléments de sécurité puis constitue lui-même une table résultant d'une concaténation des listes reçues en réponse. Selon certains modes de réalisation, la table mémorisée dans le module de routage et renvoyée en réponse à la commande « SELECT PPSE » émise par le terminal de paiement peut ne pas contenir l'intégralité des applications disponibles sur les divers éléments de sécurité. Cette souplesse permet de gérer éventuellement des abonnements divers ou être fait pour toute autre raison. La table contient donc un sous-ensemble, contenant tout ou partie de l'ensemble des applications disponibles sur l'ensemble des éléments de sécurité. La table peut également être mémorisée par le module de routage au sein de tout espace de stockage disponible dans le terminal et son emplacement n'est pas limité au composant NFC lui-même.

La table contient également pour chaque application un identifiant de l'élément de sécurité qui l'héberge. De cette façon, lorsque le module de routage reçoit la commande 3.6 « SELECT AID », il peut retrouver l'élément de sécurité qui héberge l'application sélectionnée. Il mémorise alors cet élément de sécurité comme étant l'élément de sécurité actif lors de l'étape 3.7.

Il renvoie alors la requête de sélection d'application « SELECT AID » 3.8 à l'élément de sécurité concerné, en l'occurrence l'élément de sécurité 3.32 sur la Fig. 3. Tout le trafic subséquent en provenance du terminal de paiement est alors routé vers l'élément de sécurité actif. Le basculement vers un nouvel élément de sécurité actif intervient lors de la réception par le module de routage d'une nouvelle commande « SELECT AID » venant remettre en cause l'élément de sécurité actif courant.

Selon l'exemple de réalisation de l'invention, le module de routage fonctionne selon l'organigramme de la Fig. 4.

Lors de l'étape 4.1, le module reçoit une commande émise par le terminal de paiement via la connexion NFC. Cette commande est alors filtrée et traitée en fonction de sa nature. Trois cas sont distingués.

Dans le premier cas, la commande reçue est une commande « SELECT PPSE » destinée à obtenir la liste des applications disponibles au sein de la carte de paiement sans contact émulée par le terminal mobile. On passe alors à l'étape 4.2 de constitution de la liste des applications à partir de la table mémorisée, cette liste contenant tout ou partie des applications disponibles dans l'ensemble des éléments de sécurité. Une fois cette liste construite, elle est envoyée en réponse à la commande « SELECT PPSE » à destination du terminal de paiement lors d'une étape 4.3.

Dans le second cas, la commande reçue est une commande « SELECT AID ». Lors d'une première étape 4.4, le module de routage consulte la table mémorisée pour retrouver l'élément de sécurité qui héberge l'application dont l'identifiant est passé en paramètre de la commande de sélection. Une fois cet élément de sécurité identifié, le module de routage mémorise ce nouvel élément de sécurité comme l'élément de sécurité actif courant, lors de l'étape 4.5. La commande de sélection est alors relayée à l'élément de sécurité actif lors de l'étape 4.6. De cette façon on mémorise d'une part quel est l'élément de sécurité concerné par la commande de sélection reçue et donc par les commandes suivantes et d'autre part on transmet cette commande pour une sélection effective de l'application désirée au sein de l'élément de sécurité.

Toute autre commande est traitée conformément à l'étape 4.7 qui se contente de relayer la commande à l'élément de sécurité actif. Avantageusement, un élément de sécurité actif est mémorisé par défaut au démarrage du terminal.

Il peut arriver qu'une même application soit présente dans au moins deux éléments de sécurité. Nous nous retrouvons alors avec deux applications ayant le même identifiant et localisées dans deux éléments de sécurité différents.

Avantageusement, la table mémorisée associe à chaque application un identifiant, qualifié d'identifiant public, pouvant être différent de l'identifiant réel de l'application au sein de l'élément de sécurité. Selon ce mode de réalisation, l'étape de constitution de la liste des applications 4.2 constitue ladite liste à partir des identifiants publics et non pas des identifiants réels des applications. L'étape 4.6 de relais de la commande à l'élément de sécurité comporte quant à elle une étape de remplacement de l'identifiant public par l'identifiant réel de l'application préalablement au relais de la commande à l'élément de sécurité actif. De cette façon, il est possible d'exposer des applications ayant le même identifiant hébergées dans deux éléments de sécurité différents.

Avantageusement, la table est mise à jour lorsqu'intervient une modification dans l'architecture des éléments de sécurité du terminal mobile. Par exemple, lors de l'insertion d'une nouvelle carte SIM ou encore d'une nouvelle carte SD contenant un élément de sécurité. La mise à jour est alors contrôlée par un module de mise à jour de la table, le module 2.2 s'exécutant sur le processeur du terminal.

Avantageusement, cette table est protégée par des droits d'accès. Ainsi, seul l'opérateur ou la banque peut modifier la table. L'accès à une application donnée ou même à un élément de sécurité donné peut alors être conditionné à des considérations commerciales et ne pas être automatique. Les droits d'accès sont alors avantageusement gérés par ledit module de mise à jour de la table.

## Revendications

1. Procédé de routage au sein d'un terminal (1.1) émulant une carte de paiement sans contact et comportant une pluralité d'éléments de sécurité (1.5; 1.6; 1.7; 2.6; 2.8; 2.10) pouvant dialoguer avec un composant de communication radio en champ proche (1.4; 2.3), comportant les étapes suivantes :
- une étape de réception par le composant de communication radio d'un message provenant d'un terminal de paiement (1.2; 2.5);
**caractérisé en ce qu'**il comporte en outre si la commande reçue est une commande de sélection destinée à recevoir la liste des applications disponibles :
- une étape (4.2) de constitution de ladite liste à partir d'une table mémorisée, ladite liste contenant tout ou partie des applications disponibles dans l'ensemble des éléments de sécurité ;
- une étape (4.3) d'envoi de ladite liste au terminal de paiement en réponse à la commande de sélection reçue ;
et **en ce qu'**il comporte en outre si la commande reçue est une commande de sélection d'application :
- une étape (4.4) de consultation de ladite table mémorisée pour identifier l'élément de sécurité hébergeant l'application sélectionnée ;
- une étape (4.5) de mémorisation de l'élément de sécurité identifié comme élément de sécurité actif ;
- une étape (4.6) de relais de ladite commande de sélection d'application à l'élément de sécurité actif ;
et **en ce qu'**il comporte en outre pour toutes les autres commandes reçues une étape (4.7) de relais de ladite commande reçue à l'élément de sécurité actif.

2. Procédé selon la revendication 1, **caractérisé en ce que** ladite table mémorisée comportant pour chaque application un identifiant d'application qualifié de public en outre de son identifiant d'application au sein de l'élément de sécurité, celui-ci étant alors appelé identifiant réel :
- l'étape de constitution de la liste des applications (4.2) constitue ladite liste à partir des identifiants publics et non pas des identifiants réels des applications ;
et **en ce que** :
- l'étape (4.6) de relais de la commande à l'élément de sécurité comporte quant à elle une étape de remplacement de l'identifiant public par l'identifiant réel de l'application préalablement au relais de la commande à l'élément de sécurité actif.

3. Procédé selon l'une des revendications 1 ou 2, **caractérisé en ce qu'**il comporte en outre :
- une étape de mise à jour de ladite table mémorisée lorsqu'intervient une modification dans l'architecture des éléments de sécurité du terminal mobile.

4. Procédé selon la revendication 3, **caractérisé en ce que** ladite étape de mise à jour s'effectue sous le contrôle d'un module (2.2) de mise à jour s'exécutant sur le processeur central dudit terminal.

5. Procédé selon la revendication 4, **caractérisé en ce qu'**il comporte en outre une étape de gestion des droits d'accès à ladite table par ledit module de mise à jour.

6. Terminal mobile émulant une carte de paiement sans contact et comportant une pluralité d'éléments de sécurité (1.5; 1.6; 1.7; 2.6; 2.8; 2.10) pouvant dialoguer avec un composant de communication radio en champ proche(1.4; 2.3), comportant des moyens pour réceptionner par le composant de communication radio un message provenant d'un terminal de paiement (1.2; 2.3) ;
**caractérisé en ce qu'**il comporte en outre
- des moyens pour constituer, à la réception d'une commande de sélection destinée à recevoir la liste des applications disponibles, ladite liste à partir d'une table mémorisée, ladite liste contenant tout ou partie des applications disponibles dans l'ensemble des éléments de sécurité, et
- des moyens pour envoyer ladite liste au terminal de paiement en réponse à la commande de sélection reçue ;
- des moyens pour consulter, à réception d'une commande de sélection d'application, ladite table mémorisée pour identifier l'élément de sécurité hébergeant l'application sélectionnée ;
- des moyens pour mémoriser l'élément de sécurité identifié comme élément de sécurité actif ; et
- des moyens pour relayer ladite commande de sélection d'application à l'élément de sécurité actif ;
et des moyens pour relayer toute autre commande reçue à l'élément de sécurité actif.

## Patentansprüche

1. Routing-Verfahren in einem Endgerät (1.1), das eine kontaktlose Zahlungskarte emuliert und eine Pluralität an Sicherheitselementen (1.5; 1.6; 1.7; 2.6; 2.8; 2.10) umfasst, die mit einem Nahfeld-Funkverbindungsbaustein (1.4; 2.3) kommunizieren können, das Verfahren umfassend die folgenden Schritte :
- einen Schritt des Empfangens einer, von einem Zahlungsterminal (1.2 ; 2.5) kommenden Nachricht durch den Funkverbindungsbaustein,
**dadurch gekennzeichnet, dass** das Verfahren zudem folgendes umfasst, falls der empfangene Befehl ein Auswahlbefehl zum Empfang der Liste der verfügbaren Anwendungen ist :
- einen Schritt des Erstellens (4.2) der genannten Liste ausgehend von einer gespeicherten Tabelle, wobei die genannte Liste alle oder einen Teil der Anwendungen enthält, die in sämtlichen Sicherheitselementen verfügbar sind,
- einen Schritt des Sendens (4.3) der genannten Liste an das Zahlungsterminal in Reaktion auf den empfangenen Auswahlbefehl,
und dadurch, dass es zudem folgendes umfasst, falls der empfangene Befehl ein Anwendungsauswahlbefehl ist:
- einen Schritt des Nachschlagens (4.4) in der gespeicherten Tabelle, um das Sicherheitselement, das die ausgewählte Anwendung beherbergt, zu identifizieren,
- einen Schritt des Speicherns (4.5) des identifizierten Sicherheitselements als aktives Sicherheitselement,
- einen Schritt des Weiterleitens des genannten Anwendungsauswahlbefehls an das aktive Sicherheitselement.
- und dadurch, dass es zudem für alle anderen empfangenen Befehle einen Schritt des Weiterleitens (4.7) des empfangenen Befehls an das aktive Sicherheitselement umfasst.

2. Verfahren gemäß Patentanspruch 1, **dadurch gekennzeichnet, dass** die genannte gespeicherte Tabelle für jede Anwendung eine als öffentlich eingestufte Anwendungsidentifikation neben ihrer Anwendungsidentifikation im Sicherheitselement umfasst, wobei Letztere folglich als reelle Identifikation bezeichnet wird :
- der Schritt der Erstellung der Anwendungsliste (4.2) erstellt die genannte Liste ausgehend von den öffentlichen Identifikationen und nicht von den reellen Identifikationen der Anwendungen,
und darin, dass :
- der Schritt des Weiterleitens (4.6) des Befehls an das Sicherheitselement vor dem Weiterleiten des Befehls an das aktive Sicherheitselement einen Schritt des Austauschens der öffentlichen Idenfikation gegen die reelle Identifikation der Anwendung umfasst.

3. Verfahren gemäß einem der Patentansprüche 1 oder 2, **dadurch gekennzeichnet, dass** es zudem folgendes umfasst:
- einen Schritt des Aktualisierens der genannten gespeicherten Tabelle wenn eine Änderung in der Architektur der Sicherheitselemente des mobilen Terminals erfolgt.

4. Verfahren gemäß Patentanspruch 3, **dadurch gekennzeichnet, dass** der genannte Aktualisierungsschritt unter der Kontrolle eines Aktualisierungsmoduls (2.2), die auf dem zentralen Prozessor des genannten Terminals abläuft, erfolgt.

5. Verfahren gemäß Patentanspruch 4, **dadurch gekennzeichnet, dass** es zudem einen Schritt der Verwaltung der Zugangsrechte zu der genannten Tabelle durch das genannte Aktualisierungsmodul umfasst.

6. Mobiles Endgerät, das eine kontaktlose Zahlungskarte emuliert und eine Pluralität an Sicherheitselementen (1.5 ; 1.6 ; 1.7 ; 2.6 ; 2.8 ; 2.10) umfasst, die mit einem Nahfeld-Funkverbindungsbaustein (1.4; 2.3) kommunizieren können und die Mittel umfassen, um über den Funkverbindungsbaustein eine, vom Zahlungsterminal (1.2 ; 2.3) kommende Nachricht zu empfangen ;
**dadurch gekennzeichnet, dass** es zudem folgendes umfasst :
- Mittel, um beim Empfang eines Auswahlbefehls zum Empfang der Liste der verfügbaren Anwendungen, die genannte Liste ausgehend von einer gespeicherten Tabelle zu erstellen, wobei die genannte Liste alle oder einen Teil der Anwendungen enthält, die in allen Sicherheitselementen verfügbar sind, und
- Mittel, um die genannte Liste in Reaktion auf den empfangenen Auswahlbefehl an das Zahlungsterminal zu senden ;
- Mittel, um beim Empfang eines Anwendungsauswahlbefehls in der gespeicherten Tabelle nachzuschlagen, um das Sicherheitselement zu identifizieren, das die gewählte Anwendung beherbergt,
- Mittel, um das identifizierte Sicherheitselement als aktives Sicherheitselement zu speichern und
- Mittel, um den genannten Anwendungsauswahlbefehl an das aktive Sicherheitselement weiterzuleiten, und
- Mittel, um jeden anderen empfangenen Befehl an das aktive Sicherheitselement weiterzuleiten.

## Claims

1. Method for routing within a mobile terminal (1.1) emulating a contactless payment card and comprising a plurality of secure elements (1.5; 1.6; 1.7; 2.6; 2.8; 2.10) that can dialogue with a near field radio communication component (1.4; 2.3), comprising the following steps:
- a step of reception by the radio communication component of a message coming from a payment terminal (1.2; 2.5);
**characterised in that** it further comprises, if the command received is a selection command intended to receive the list of available applications:
- a step (4.2) of forming said list from a stored table, said list containing all or some of the applications available in all the secure elements;
- a step (4.3) of sending said list to the payment terminal in response to the selection command received;
and **in that** it further comprises, if the command received is an application selection command:
- a step (4.4) of consulting said stored table in order to identify the secure element hosting the selected application;
- a step (4.5) of storing the secure element identified as an active secure element;
- a step (4.6) of relaying said application selection command to the active secure element;
and **in that** it further comprises, for all the other commands received, a step (4.7) of relaying said received command to the active secure element.

2. Method according to claim 1, **characterised in that**, said stored table comprising, for each application, an application identifier termed public in addition to its application identifier within the secure element, this then being termed a real identifier:
- the step of forming said list of applications (4.2) forms said list from the public identifiers rather than from the real identifiers of the applications;
and **in that**:
- the step (4.6) of relaying the command to the secure element for its part comprises a step of replacing the public identifier with the real identifier of the application prior to the relaying of the command to the active secure element.

3. Method according to one of claims 1 or 2, **characterised in that** it further comprises:
- a step of updating said stored table when a modification occurs in the architecture of the secure elements of the mobile terminal.

4. Method according to claim 3, **characterised in that** said updating step is performed under the control of an updating module (2.2) executed on the central processor of said terminal.

5. Method according to claim 4, **characterised in that** it further comprises a step of the management of the rights of access to said table by said updating module.

6. Mobile terminal emulating a contactless payment card and comprising a plurality of secure elements (1.5; 1.6; 1.7; 2.6; 2.8; 2.10) able to dialogue with a near field radio communication component (1.4; 2.3), comprising means for the reception. by the radio communication component, of a message coming from a payment terminal (1.2; 2.3);
**characterised in that** it further comprises
- means for forming said list from a stored table, when a selection command intended to receive the list of available applications is received, said list containing all or some of the applications available in all the secure elements; and
- means for sending said list to the payment terminal in response to the selection command received;
- means for consulting said stored table, when an application selection command is received, in order to identify the secure element hosting the selected application;
- means for storing the secure element identified as an active secure element; and
- means for relaying said application selection command to the active secure element;
and means for relaying any other received command to the active secure element.
